# EUROPEAN PATENT SPECIFICATION

(11) **EP 3 207 101 B1**
(45) Date of publication and mention of the grant of the patent: **22.07.2020**
(21) Application number: 15777974.5
(22) Date of filing: 13.10.2015
(51) Int. Cl.: C09D 5/34, C09D 5/00

(54) **COMPOSITION SUITABLE AS FILLER AND SEALANT**
ZUSAMMENSETZUNG ZUR VERWENDUNG ALS FÜLLSTOFF UND DICHTUNGSMITTEL
COMPOSITION APPROPRIÉE EN TANT QUE CHARGE ET AGENT DE SCELLEMENT

(30) Priority: 13.10.2014 NL 2013626; 10.11.2014 NL 2013763
(43) Date of publication of application: 23.08.2017
(73) Proprietor: KochiToon Innovations B.V., 2582 VJ Den Haag (NL)
(72) Inventor: KOCHIBROLASHVILI, Gurami, 2582 VJ Den Haag (NL); VAN LOON, Sander, 1098 XH Amsterdam (NL); RENKEMA, Jaap, 6125 AR Obbicht (NL)
(74) Representative: Renkema, Jaap
(86) International application number: PCT/EP2015/073697
(87) International publication number: WO 2016/059062

(56) References cited:
- EP-A2- 0 331 143
- US-A- 2 308 879
- US-A- 2 610 158
- US-A- 3 281 267
- US-A- 5 116 667
- US-A1- 2013 345 348

## Description

The invention relates to a composition which can be used as filler material or sealant, a method to prepare the composition and the use of the composition.

Compositions that can be used as filler or sealant compositions are known in the art. Most of these compositions are impermeable to water and moisture (water vapour), and will not allow any transport of them. Recently compositions have been published that do show permeability of moisture and can be used as filler compositions. These compositions have been published as WO 2012/072248. The compositions contain between 30 wt% and 60 wt% of a dispersion of a hydrophilic binder; between 30wt% and 70wt% of a filler; between 0.05wt% and 1wt% of a thickener, and they contain a high amount of filler which gives a pigment volume concentration (PVC) between 40% and 80%. Such compositions have a drawback of low water resistance and low elasticity. Alternative compositions which are known as sealant compositions are very hydrophobic, having a high water resistance and optionally good elasticity. It is a disadvantage of these modern sealants, that they cause in approximately 95% of the cases a substantial accumulation of the moisture in construction materials such as wood, plaster and limestone within a year. The moisture accumulates precisely along the joints, which are filled with the sealant, and it gradually ruins the entire construction.

There is a need for a new composition which can be used as sealant composition or filler composition which has a good elasticity, preferably a high water resistance but which is also permeable to moisture.

The present invention relates to a composition according to claim 1 comprising
a. 5-50 weight% (solid) of polyisoprene rubber,
b. 1-10 weight% (solid) of a dispersion agent
c. 3-60 weight% of a filler, and
d. 15-40 wt% water,
wherein the weight percentages are based on the total weight of the composition and,
wherein the filler comprises pumice powder or 3-40 wt% slaked lime.

The composition according to the invention comprises polyisoprene rubber.

The polyisoprene rubber can be a natural rubber or a synthetic polymer of isoprene. Preferably, the polyisoprene rubber is a natural rubber which is used as a latex.

Natural rubber latex comprises a polymer of cis-1,4-polyisoprene. The molecular weight of the polymer normally is between 100,000 to 1,000,000 Daltons. Natural rubber latex can also comprise a polymer of trans-1,4-polyisoprene.

Natural rubber is commercially available as a latex dispersion in water. Usually, a small amount of ammonia is added to the dispersion to prevent the coagulation of the latex. The solids content of the dispersion preferably is between 40-70 wt%, more preferably between 50 and 65 wt% based on the total weight of the latex dispersion.

The composition according to the invention comprises 5-50 weight% of polyisoprene rubber based on the total weight of the composition, preferably the composition comprises 7-48 weight% of polyisoprene rubber. Preferably the polyisoprene rubber is present as a latex. The amount of polyisoprene rubber is expressed as the amount of the solid content of the latex comprising the polyisoprene rubber. For example when the composition comprises 35 wt% of polyisoprene rubber, which is present as a latex having a solids content of 70%, than the composition comprises 50 wt% of polyisoprene latex, having 35 wt% of solids and 15 wt% of water.

The composition according to the invention comprises 1-10 weight% (solid) of a dispersion agent. Dispersion agents are compounds that lower the surface tension of a liquid, the interfacial tension between two liquids, or the interfacial tension between a liquid and a solid. In solutions this behaviour is known as wetting, and it occurs as a result of dispersion agents adsorbing to the air/water interface. Dispersion agents may act as detergents, wetting agents, emulsifiers, foaming agents, and dispersants. Dispersion agents can be synthetic dispersion agents or natural dispersion agents.

The synthetic dispersion agents can for example been chosen from the group of alcohol ethoxylates, amide ethoxylates, amine ethoxylates, arylalkyl phenol ethoxylates, fatty-acid ethoxylates, block polyethers, glycol ethers, polyethyleneglycol (PEG) esters, alkyl ether sulfonates, alkylaryl sulfonates, sulfate esters, sulfonate esters, phosphate esters, alcohol ethoxysulfates, polymers with acidic or salt groups and polymeric dispersing agents. A preferred example of a synthetic dispersion agent is Disperbyk® 190.

The natural dispersion agents can for example been chosen from the group of sarcosinates, sulfosuccinates, taurates, lecithins, betaine and casein. A preferred example of a natural dispersion agent comprises casein. Casein is preferably used in the composition according to the invention because casein is a natural dispersion agent. A preferred casein is a borax treated casein. In combination with slaked lime borax treated casein performs better than synthetic dispersion agents, like for example Disperbyk® 190. A composition comprising both borax treated casein and slaked lime will have a very good water resistance.

The composition according to the invention comprises 1-10 weight% of the dispersion agent, preferably 1-8 weight %, more preferably 1.5-7 weight% based on the total weight of the composition.

Casein is a family of related phosphoproteins. These phosphoproteins are commonly found in mammalian milk. Casein is found in milk as a suspension of casein micelles. There are four different types of casein proteins: αs1-, αs2-, β-, and κ-caseins. Together the casein, proteins form 75-85 wt% of the protein in milk. Casein powder needs to be soaked thoroughly - overnight, if possible. After soaking it must be hydrolyzed with specially suited alkalis. The hydrolyzing agents determine to a large extent to what purpose the casein glue can be used. The extraordinarily permanent lime-casein, made with lime putty or clear lime water, has already received its well-deserved praise in reference of materials for mural painting. For the purpose of easel painting, however, borax casein has proved the best one, although theoretically it may appear that ammonium casein is better, because all alkaline residues evaporate after complete hydrolyzation. It has been found in practice, however, that liquid casein retains its ammonia residue for a long time, losing its viscous consistency after three days and decomposing relatively quickly. Strong alkalis, such as soda (sodium carbonate) or potash (potassium carbonate), should not be used to hydrolyze casein intended for painting. Borax (sodium tetraborate), on the other hand, is a weak alkali that has proved useful in practice, but mainly in easel painting, where weather-resistance is no factor. Crystalline borax containing water of crystallization, the kind available through the retail trade, should be used when making casein medium. The anhydrous variety should be avoided.

The composition according to the invention can comprise 0.5-10 weight% the casein, preferably 1-8 weight %, more preferably 1.5-7 weight% based on the total weight of the composition.

In an embodiment, the casein used in the present invention has been hydrolyzed with borax. An example of the preparation of the borax casein can be found below (for example Borax Casein according to Wehlte):
40 g casein powder is provided, which is left for approx. 12 hours in 125 ml cold water, and 16 g crystalline borax which is dissolved in 125 ml hot water.

The casein is usually prepared in a large porcelain mortar with a pestle, but any enamelled or plastic bowl will do. While the casein is soaking, the bowl is kept covered with a thick, wet cloth folded several times, which prevents the formation of a dry top layer. No unsoaked granules should remain on the edge of the bowl. It is best to leave it overnight to make sure that the casein absorbs as much water as possible. The hot borax solution is stirred into the granular, pulpy casein and stirred again after a few minutes. It is then left standing. Within 1-2 hours one may observe that the viscous, yellowish, translucent mass no longer contains recognizable casein granules, a sign that the hydrolyzation is complete.

Nevertheless, it is sometimes left standing up to a full day in order to make the casein medium even more viscous. If casein medium is to be kept for several days or weeks, it must be preserved with a disinfectant. It is advisable to prepare only small amounts of casein and not keep it for long periods.

Borax casein lasts longer when it is hygienically prepared, i.e. using boiled water and clean containers. Borax casein can then be stored for half a year, sometimes even longer, without adding preservation agents.

The composition according to the invention can comprise 0.5-10 weight% of the borax treated casein, preferably 1-8 weight %, more preferably 1.5-7 weight% based on the total weight of the composition.

The composition according to the invention contains a filler, wherein the filler comprises pumice powder or 3-40 wt% slaked lime.

Preferably, fillers to be used in the filler composition according to the present invention are fillers comprising particles of at least one material selected from the group consisting of talc, calcite, calcium carbonate and kaolin, iron oxides, natural and precipitated barium sulfates, barites, aluminium silicate, sodium silicate, potassium silicate, aluminium oxides, calcium magnesium carbonates, dolomites, feldspar, nephelinesyenite, calcium silicates, zinc oxide, titanium dioxide, zinc phosphate, graphite, zeolites or other families of sulfates, carbonates, silicates, oxides and vanadates. Also volcanic fillers like pumice powder can be used in the invention. Also combinations of filler's can be used. The particle size of the filler preferably is 1-200 µm, more preferably 5-100 µ.

The amount of filler ranges between 3 and 60 wt%, preferably between 7 and 50 wt%, relative to the total of the composition.

In a preferred embodiment of the invention the composition contains slaked lime. Slaked lime has the chemical formula: Ca(OH)₂. This particular type of Ca(OH)₂ is obtained from relatively pure limestone, and it slowly reacts with CO₂ from the air to harden and form CaCO₃. An example of suitable slaked lime is for example 'Mekal' produced by 'Carmeuse' at Gouda, the Netherlands which contains at least 70% of Ca(OH)₂ (CE-standard according to EN 459-1). Slaked lime gives very special properties to the composition: it enhances the water resistance of the composition, and enhances the drying of the product after application.

The amount of slaked lime ranges between 3 and 40 wt% relative to the total weight of the composition, more preferably between 5 and 20 wt%.

The composition comprises water. In many cases the water is present in the latex of the isoprene rubber and in the solution of borax casein. Optionally additional water can be added to the composition. The amount of water preferably ranges between 15 and 40 wt%.

Optionally, the composition according to the present invention also may comprise between 0.001 and 20 wt% of fibers, preferably between 0.01 and 10 wt% of fibers, more preferably between 0.05 and 5 wt% of fibers. The fibers can be natural or synthetic fibers. Examples of natural fibers are fibers of cotton, flax, hemp, sisal, raffia, jute, coconut, kenaf, bamboo, wool, angora, mohair, alpaca, silk and cellulose. Examples of synthetic fibers are fibers of nylon, polyester, acrylic and polyolefin.

Preferably, the fibers are cellulose fibers. The cellulose fibers can be chosen from natural fibers, like cotton or flax fibers or can be synthetic fibers, like viscose or rayon fibers.
The fibers preferably have a length of 100-1000 µm, more preferably a length of 150-900 µm.
The presence of the fibers in the filler composition has the advantage that the composition shows less shrinkage and/or cracks upon drying of the composition.

The composition according to the present invention may comprise silica particles with a particle size between 5 and 500 nm. If present, the silica particles are preferably present in the form of a silica sol in an amount of between 1 wt% and 10wt%, preferably between 2 wt% and 9 wt%, more preferably between 3 wt% and 8 wt% based on the total weight of the filler composition. Preferably, the solid content of the silica sol is between 25 wt% and 50 wt%. Silica sol particles are not considered to be a filler in the context of the present invention.
In an embodiment, the silica sol may comprise surface modified colloidal silica. Preferably, the surface modified colloidal silica is an epoxy-silane surface modified colloidal silica. An advantage of the use of such silica sol is that the epoxy silane surface modification provides a stable sol which may be blended more easily with the other components of the filler composition. In the dried composition the surface modified silica particles are well and uniformly distributed throughout the entire composition and therefore provide porosity and hardness throughout the entire composition. The reactive surface groups (epoxy) may also provide crosslinking of the polymers present in the composition (e.g. the binder). The presence of silica particles in the composition increases the adhesion of the composition to a surface, gives the composition a higher water resistance after drying and enhances the vapour permeability of the composition.

The composition according to the present invention may further comprise additives, for example flame retardants, stabilizers, colorants, antioxidants, UV-absorbers and/or biocides.

In a preferred embodiment, the composition according to the invention comprises
a. 5-50 weight% of natural rubber,
b. 1-10 weight% of casein
c. 3-20 wt% of slaked lime
d. 15-40 wt% water, and
e. 1-10 wt% of cellulose fibers,
wherein the weight percentages are based on the total weight of the composition.
The casein can be borax treated casein.
This composition is excellent in drying time and water resistance.

In another preferred embodiment of the invention the composition comprises
a. 5-50 weight% of natural rubber,
b. 1-10 weight% of casein
c. 30-60 wt% of pumice powder
d. 15-40 wt% water, and,
e. 1-10 wt% of cellulose fibers,
wherein the weight percentages are based on the total weight of the composition. The casein can be borax treated casein.
This composition has a good elasticity, although the composition is highly filled and also good permeability to moisture.

The invention also relates to a method to prepare the composition according to the invention. This method contains the steps of
a. Providing a polyisoprene rubber latex composition, providing a dispersion agent and a filler,
b. Adding the dispersion agent to the polyisoprene rubber composition,
c. Mixing of the polyisoprene rubber composition and the dispersion agent to form a mixed composition,
d. Adding of the filler to the mixed composition in small steps while mixing. In this method a preferred dispersion agent is casein.

By adding the dispersion agent to the rubber latex, a homogeneous mixture is obtained, which can be mixed with the filler.

The invention is further directed to the use of the composition as a repair material, sealant or filler.

### Examples.

The invention is further illustrated with a number of examples and comparative experiments.

The following ingredients have been used as received.
Cellulose fibers: Arbocel® BWW 40, fibres of 200 micron, http://www.kremer-pigmente.com/en/fillers-und-building-materials/arbocel-bww-40-59770.html Cellulose fibers: Armicel, hydrophilic, 400-800 micron size.
Pumice powder: Pumice Powder 6/0, very fine particles < 90 micron, volcanic rock from USA, http://www.kremer-pigmente.com/en/fillers-und-building-materials/pumice-powder-6/0--very-fine-599907.html.
Calcite: Calcium carbonate, natural CaCO3, white, average particle size is about 20 µ http://www.kremer-pigmente.com/en/fillers-und-building-materials/calcite-58720.html K2030 Koestrosol: colloidal silica sol, non surface treated
Slaked lime: 'Mekal' produced by 'Carmeuse' at Gouda,
Bindzil® CC30, epoxy-silane surface modified colloidal silica's of Akzo Nobel with a total solids content of 30 wt% and 40 wt% respectively;
Emultex VV530, a polyvinylacetate hydrophilic binder of Synthomer Ltd, having a total solids content of between 51.5 wt% and 53.5 wt% and a water (hydrophilic solvent) content of between 46.5 wt% and 48.5 wt% ;
Natural rubber latex, art 77200 from Kremer, solids content 60.07, dissolved in ammonia 0.25%.
Caseine Kremer: art 63210, borax hyrolized casein product 18 wt% solids (estimated) Caseine Schminke: borax treated casein product, 18 wt% solids (estimated)

A number of compositions have been prepared by providing a latex composition, stabilized with ammonia, providing borax treated casein and providing one or more fillers and cellulose fibers. First the rubber latex and borax treated caseine are mixed to obtain a liquid. The fillers are mixed into the liquid in small steps, while stirring. Compositions are obtained. Ingredients and test results are summarized in table 1.

### Testmethods.

The test methods are mainly visual and simple hands-on tests. The compositions have been applied on a piece of wood, and application, drying and end performance have been determined. The compositions and dried compositions are rated from 1 (=low) to 5 (=high) and compared in this semi quantitative way.

Ease of application is a measure for how easy the composition can be applied to the wood. Important are the adhesion to the wood and the cohesion and presence or absence of sagging. When cohesion, adhesion are high, sagging is absent and application is easy, the ease of application of the composition is rated as 5. When the substrate is difficult to apply, does not stick to the wood and shows sagging, the ease of application of the composition is rated 1.

Shrinkage is a measure for the amount of shrinkage of the composition upon drying. No shrinkage gives rating 5, severe shrinkage gives rating 1.

Crack formation is a measure for the amounts of cracks present after drying. Crack formation is visually determined. No cracks gives rating 5, severe cracking gives rating 1.

Drying time is the amount of time needed to dry a sample having a thickness of 1 cm at room temperature. Rating 1 is more than 48 hours drying time, rating 2 between 24 and 48 hours, rating 3 is 12-24 hours, rating 4 is 6-12 hours, and rating 5 is less than 6 hours.

Moisture transport is a measure for the moisture penetration through a testpiece. Two pieces of pinewood are glued together with the test composition. The sizes of the wood pieces are approximately 2*2*2 cm, and the thickness of the composition is about 5 mm. After drying the testpiece, one part (bottom) of the testpiece is put into water, in such a way that the composition stays dry and also the second piece (top) of wood stays dry. When no water penetrated the second piece (top) of wood, the moisture permeability is none and a rating of 1 is given. When the moisture transport through the composition takes more than 8 hours, rating 2 is given. When this time is between 4 and 8 hours, rating 3 is achieved, while between 2 and 4 hours is rating 2 and within 2 hours a rating 5 is given.

Water resistance is the ability to withstand degradation of a structure due to the influence of water. A testpiece comprising two pieces of wood glued together by a composition is prepared and after drying submersed in water of room temperature. The water resistance is measured by the time needed to weaken the testpiece such that easy delamination can occur (optionally by manually separating the two pieces of wood). When the resistance is less than 3 days, rating 1 is given. Resistance between 3 days and 1 week gives rating 2, more than 1 week rating 3, more than 2 weeks rating 4, and more than 3 weeks rating 5.

Elasticity is estimated manually. Less than 2 % is rating 1, between 2-5% is rating 2, between 5-10% is rating 3, between 10-20% is rating 4, and more than 20% is rating 5.

Example CE-A is a composition without any rubber component. The elasticity of the composition is very low. Examples 1-3 show compositions that have good elasticity, good moisture transport. The water resistance is still on the low side. Examples 4-9 show the use of slaked lime which dramatically increases the water resistance, but also has an influence on the elasticity when present in too high amounts.

**Table 1**

| **examples** | | | | | | | | | | | |
|---|---|---|---|---|---|---|---|---|---|---|---|
| | | | | | | | | | | | |
| **tot.gew. gramm** | **CE-A** | **1** | **2** | **3** | **4** | **5** | **6** | **7** | **8** | **9** | **10** |
| emultex | 34,19 | | | | | | | | | | |
| natural rubber latex (60% solids) | 0 | 15,17% | 18,80% | 34,01% | 73,53% | 18,08% | 26,04% | 37,45% | 58,14% | 70,67% | 39,30% |
| borax caseine Kremer (18 wt% solids,) | 0 | 30,35% | 18,80% | 6,80% | | | | | | | |
| Borax Caseine Schminke (18 wt% solids) | 0 | | | | 11,03% | 36,17% | 26,04% | 18,73% | 11,63% | 12,37% | |
| BYK 190 | | | | | | | | | | | 2,80% |
| slaked lime | 0 | | | | 8,09% | 36,17% | 39,06% | 37,45% | 17,44% | 7,77% | |
| K2030 koestrosol | 2,56 bindzil | 2,28% | 1,88% | 1,81% | 3,68% | 2,71% | 2,60% | 1,87% | 2,91% | 3,53% | 2,10% |
| Cellulose fibres Arbocel® "BWW 40, 200 micron | 0 | 7,59% | 5,64% | 4,54% | 3,68% | | | | | | |
| Cellulose fibres Armicel, hydrofilic, 400-800 micron | 0 | | | | | 0,07 | 6,25% | 4,49% | 4,07% | 5,65% | |
| pumice powder | 63,25 | 44,61% | 54,89% | 49,43% | | | | | 5,81% | | 55,80% |
| Calcite | 0 | | | 3,40% | | | | | | | |
| | | | | | | | | | | | |
| **ease of application** | 2 | 4 | 5 | 5 | 3 | 5 | 5 | 5 | 5 | 5 | 5 |
| **adhesion direct after application** | 3 | 5 | 5 | 5 | 5 | 5 | 5 | 5 | 5 | 5 | 5 |
| **shrinkage** | 3 | 4 | 4 | 4 | 4 | 4 | 4 | 4 | 4 | 5-4 | 4 |
| **crack formation** | 4 | 5 | 5 | 5 | 4 | 3 | 3 | 4 | 5 | 5 | 5 |
| **drying time** | 3 | 2 | 2 | 3 | 5 | 5 | 5 | 5 | 4 | 4 | 3 |
| **adhesion after drying of product** | | 5 | 5 | 5 | 5 | 5 | 5 | 5 | 5 | 5 | 5 |
| **moisture transport** | 3 | 3 | 3 | 3 | 3 | 2 | 3 | 3 | 3 | 3 | 3 |
| **water resistance** | 2 | 2 | 2 | 1 | 5 | 5 | 5 | 5 | 5 | 5 | 2 |
| **elasticity** | 1 | 3 | 3 | 4 | 3 | 1 | 1 | 1 | 2 | 3 | 3 |

## Claims

1. A composition comprising
a. 5-50 weight% (solid) of polyisoprene rubber,
b. 1-10 weight% (solid) of a dispersion agent,
c. 3-60 weight% of a filler, and
d. 15-40 wt% water
wherein the weight percentages are based on the total weight of the composition and,
wherein the filler comprises pumice powder or 3-40 wt% slaked lime.

2. Composition according to claim 1, wherein the polyisoprene rubber is natural rubber.

3. The composition according to any one of claims 1- 2, wherein the dispersion agent is casein.

4. The composition according to claim 3, wherein the casein is a borax treated casein.

5. The composition according to claims 3 or 4, wherein the amount of casein ranges between 1 and 8wt%.

6. Composition according to any one of claims 1-5, wherein the filler comprises between 5 and 20 wt% slaked lime.

7. Composition according to any one of claims 1-6, wherein the filler comprises pumice powder.

8. Composition according to any one of claims 1-7, wherein the composition comprises
a. 5-50 weight% of natural rubber,
b. 1-10 weight% of a borax treated casein,
c. 5-20 wt% of slaked lime,
d. 15-40 wt% water, and,
e. 1-10 wt% of cellulose fibers,

9. Composition according to any one of claims 1-7, wherein the composition comprises
a. 5-50 weight% of natural rubber,
b. 1-10 weight% of a borax treated casein,
c. 30-60 wt% of pumice powder,
d. 15-40 wt% water, and
e. 1-10 wt% of cellulose fibers,

10. The composition according to claim 8 or 9, wherein the cellulose fibers have a length between 100 and 1000 µm.

11. Process for the preparation of a composition according to any one of claims 1-10, wherein the process comprises the following steps:
a. Adding the dispersion agent to the polyisoprene rubber latex composition,
b. Mixing the polyisoprene rubber composition and the dispersion agent to form a mixed composition,
c. Adding the filler to the mixed composition in small steps while mixing.

12. Process according to claim 11, wherein the dispersion agent is casein.

13. Use of the composition according to anyone of claims 1-10 as a repair material, sealant or filler.

## Patentansprüche

1. Zusammensetzung, die Folgendes umfasst:
a. 5-50 Gewichts-% (fest) Polyisoprenkautschuk,
b. 1-10 Gewichts-% (fest) eines Dispersionsmittels,
c. 3-60 Gewichts-% eines Füllstoffs und
d. 15-40 Gew.-% Wasser,
wobei die Gewichtsprozente auf dem Gesamtgewicht der Zusammensetzung basieren und,
wobei der Füllstoff Bimssteinmehl oder 3-40 Gew.-% gelöschten Kalk umfasst.

2. Zusammensetzung nach Anspruch 1, wobei der Polyisoprenkautschuk Naturkautschuk ist.

3. Zusammensetzung nach einem der Ansprüche 1-2, wobei das Dispersionsmittel Casein ist.

4. Zusammensetzung nach Anspruch 3, wobei das Casein ein mit Borax behandeltes Casein ist.

5. Zusammensetzung nach den Ansprüchen 3 oder 4, wobei die Menge an Kasein im Bereich zwischen 1 und 8 Gew.-% liegt.

6. Zusammensetzung nach einem der Ansprüche 1-5, wobei der Füllstoff zwischen 5 und 20 Gew.-% gelöschten Kalk umfasst.

7. Zusammensetzung nach einem der Ansprüche 1-6, wobei der Füllstoff Bimssteinmehl umfasst.

8. Zusammensetzung nach einem der Ansprüche 1-7, wobei die Zusammensetzung Folgendes umfasst:
a. 5-50 Gewichts-% Naturkautschuk,
b. 1-10 Gewichts-% eines mit Borax behandelten Caseins,
c. 5-20 Gew.-% gelöschten Kalk,
d. 15-40 Gew.-% Wasser und
e. 1-10 Gew.-% Cellulosefasern.

9. Zusammensetzung nach einem der Ansprüche 1-7, wobei die Zusammensetzung Folgendes umfasst:
a. 5-50 Gewichts-% Naturkautschuk,
b. 1-10 Gewichts-% eines mit Borax behandelten Caseins,
c. 30-60 Gew.-% Bimssteinmehl,
d. 15-40 Gew.-% Wasser und
e. 1-10 Gew.-% Cellulosefasern.

10. Zusammensetzung nach Anspruch 8 oder 9, wobei die Cellulosefasern eine Länge zwischen 100 und 1000 µm aufweisen.

11. Verfahren zur Herstellung einer Zusammensetzung nach einem der Ansprüche 1-10,wobei das Verfahren die folgenden Schritte umfasst:
a. Zugeben des Dispersionsmittels zu der Polyisoprenkautschuk-Latexzusammensetzung,
b. Mischen der Polyisoprenkautschuk-Zusammensetzung und des Dispersionsmittels zur Bildung einer gemischten Zusammensetzung,
c. Zugeben des Füllstoffs zur gemischten Zusammensetzung in kleinen Schritten unter Mischen.

12. Verfahren nach Anspruch 11, wobei das Dispersionsmittel Casein ist.

13. Verwendung der Zusammensetzung nach einem der Ansprüche 1-10 als Reparaturmaterial, Dichtmittel oder Füllstoff.

## Revendications

1. Composition comprenant
a. 5 à 50 % en poids (solide) d'un caoutchouc de polyisoprène,
b. 1 à 10 % en poids (solide) d'un agent de dispersion,
c. 3 à 60 % en poids d'une charge, et
d. 15 à 40 % en poids d'eau
dans laquelle les pourcentages en poids sont basés sur le poids total de la composition et,
la charge comprenant de la poudre de pierre ponce ou 3 à 40 % en poids de chaux éteinte.

2. Composition selon la revendication 1, dans laquelle le caoutchouc de polyisoprène est un caoutchouc naturel.

3. Composition selon l'une quelconque des revendications 1 à 2, dans laquelle l'agent de dispersion est la caséine.

4. Composition selon la revendication 3, dans laquelle la caséine est une caséine traitée au borax.

5. Composition selon les revendications 3 ou 4, dans laquelle la quantité de caséine se situe dans la plage comprise entre 1 et 8 % en poids.

6. Composition selon l'une quelconque des revendications 1 à 5, dans laquelle la charge comprend entre 5 et 20 % en poids de chaux éteinte.

7. Composition selon l'une quelconque des revendications 1 à 6, dans laquelle la charge comprend de la poudre de pierre ponce.

8. Composition selon l'une quelconque des revendications 1 à 7, dans laquelle la composition comprend
a. 5 à 50 % en poids d'un caoutchouc naturel,
b. 1 à 10 % en poids dune caséine traitée au borax ;
c. 5 à 20 % en poids de chaux éteinte,
d. 15 à 40 % en poids d'eau, et
e. 1 à 10 % en poids de fibres de cellulose.

9. Composition selon l'une quelconque des revendications 1 à 7, dans laquelle la composition comprend
a. 5 à 50 % en poids d'un caoutchouc naturel,
b. 1 à 10 % en poids d'une caséine traitée au borax,
c. 30 à 60 % en poids de poudre de pierre ponce,
d. 15 à 40 % en poids d'eau, et
e. 1 à 10 % en poids de fibres de cellulose.

10. Composition selon la revendication 8 ou 9, dans laquelle les fibres de cellulose ont une longueur comprise entre 100 et 1000 µm.

11. Procédé de préparation d'une composition selon l'une quelconque des revendications 1 à 10, dans lequel les procédé comprend les étapes suivantes :
a. addition de l'agent de dispersion à la composition de latex de caoutchouc de polyisoprène,
b. mélange de la composition de caoutchouc de polyisoprène et de l'agent de dispersion pour former une composition mixte,
c. addition de la charge à la composition mixte en petites étapes tout en mélangeant.

12. Procédé selon la revendication 11, dans lequel l'agent de dispersion est la caséine.

13. Utilisation de la composition selon l'une quelconque des revendications 1 à 10 comme matériau de réparation, agent de scellement ou charge.
